# EUROPÄISCHE PATENTSCHRIFT

(11) **EP 1 423 623 B1**
(45) Veröffentlichungstag und Bekanntmachung des Hinweises auf die Patenterteilung: **09.11.2005**
(21) Anmeldenummer: 02769894.3
(22) Anmeldetag: 28.08.2002
(51) Int. Cl.: F16D 41/07

(54) **FREILAUF MIT EINEM MIT FASERVERSTÄRKTEM KUNSTSTOFF UMWICKELTEN FREILAUFAUSSENRING**
FREE-WHEEL WITH A FREE-WHEEL OUTER RIM COVERED WITH FIBRE-REINFORCED PLASTIC
ROUE LIBRE DOTEE D'UNE BAGUE EXTERIEURE ENTOUREE DE PLASTIQUE RENFORCE PAR DES FIBRES

(30) Priorität: 07.09.2001 DE 10144032
(43) Veröffentlichungstag der Anmeldung: 02.06.2004
(73) Patentinhaber: Paul Müller GmbH & Co. KG Unternehmensbeteiligungen, 90411 Nürnberg (DE)
(72) Erfinder: EBERHARD, Köhler, 09127 Chemnitz (DE); FREI, Holger, 09618 Brand-Erbisdorf (DE); EBERHARD, Karl, 91080 Spardorf (DE); ELBACHER, Manfred, 90403 Nürnberg (DE)
(74) Vertreter: Lösch, Christoph Ludwig Klaus
(86) Internationale Anmeldenummer: PCT/DE2002/003161
(87) Internationale Veröffentlichungsnummer: WO 2003/025411

(56) Entgegenhaltungen:
- EP-A- 0 484 583
- EP-A- 0 550 971
- FR-A- 1 566 763

## Beschreibung

Die Erfindung betrifft einen Freilauf, insbesondere einen Klemmrollen- oder Klemmkörperfreilauf mit den Merkmalen des Oberbegriffs des Patentanspruchs 1. Ein solches Freilauf ist aus FR-A-0 484 583 bekannt.

Klemmfreiläufe sind in der Technik häufig angewandte Bauelemente. Ihr Einsatz erfolgt vorrangig als Richtungs- oder Überholkupplung, Rücklaufsperre und Schaltfreilauf. Das übertragbare Moment eines Freilaufes hängt maßgeblich von der Gestaltung der Welle und des Freilaufaußenringes ab. Oftmals wird das übertragbare Moment durch die Aufweitung des Spaltes zwischen der Welle und dem Freilaufaußenring begrenzt. Eine Verringerung der Aufweitung des Freilaufaußenringes kann somit zur Momentensteigerung des Freilaufes beitragen.

Der Erfindung liegt die Aufgabe zugrunde, einen Freilauf anzubieten, bei dem eine unerwünschte Aufweitung des Freilaufaußenrings reduziert oder vermieden wird. Die Aufgabe wird durch die Merkmale des kennzeichnenden Teils des Patentanspruchs 1 in Verbindung mit den Merkmalen des Oberbegriffs gelöst. Vorteilhafte Ausführungsformen der Erfindung werden in den Unteransprüchen beschrieben.

Beim erfindungsgemäßen Freilauf wird der Freilaufaußenring mit einem Ring aus faserverstärktem Kunststoff umwickelt. Dazu wird der insbesondere gehärtete Freilaufaußenring nach dem Härtevorgang zusätzlich mit mindesteris einem Ring aus faserverstärktem Kunststoff über einzelne Ringbreitenbereiche oder die gesamte Ringbreite umwickelt oder der Ring aus faserverstärktem Kunststoff wird in mindestens eine vor dem Härten in den Freilaufaußenring eingebrachte umlaufende Nut eingewickelt. Es können auch mehrere umlaufende Nuten im Freilaufaußenring vorgesehen sein. Die Gestaltung der umlaufenden Nut ist dabei so vorzunehmen, daß der gehärtete Freilaufaußenring als Wickelkern zum Aufwickeln des Ringes.aus faserverstärktem Kunststoff genutzt werden kann. Das Auflegen der Fasern erfolgt auf einer Wickelmaschine mit entsprechender Vorspannung.

Die Lage der Fasern ist dabei vorteilhafterweise im wesentlichen unidirektional und in Umfangsrichtung um eine Achse, damit der hohe Elastizitätsmodul der Faser ausgenutzt wird. Dadurch wird einer Aufweitung des Freilaufaußenringes infolge der Kontaktkraft eines Klemmkörpers optimal entgegengewirkt. Die Folge ist ein höheres übertragbares Moment, da der Klemmkörper aufgrund der geringeren Aufweitung eines Spaltes zwischen einer Welle und dem Freilaufaußenring weniger weit einrollt und damit gleichzeitig die zulässige Flächenpressung besser ausgenutzt wird.

Die Dicke des Freilaufaußenringes und die Tiefe der umlaufenden Nut richten sich dabei nach dem zu erzielenden Moment und der Größe der Flächenpressung zwischen einer außenseitigen Klemmfläche des Klemmkörpers und dem Freilaufaußenring. Ein Durchschlagen der Flächenpressung über den Freilaufaußenring auf den aufgewickelten Ring aus faserverstärktem Kunststoff ist zu verhindern.

Die Höhe des Ringes aus faserverstärktem Kunststoff soll die Tiefe der umlaufenden Nut im Freilaufaußenring nicht überschreiten. Damit wird gewährleistet, daß über Paßflächen, welche auch zwischen benachbarten Nuten angeordnet sein können, ein Einbringen des Freilaufaußenringes in ein entsprechendes Gehäuse ohne Verletzung der Fasern möglich ist. Die Breite der umlaufenden Nut und damit des Ringes aus faserverstärktem Kunststoff kann vorteilhafterweise die Breite des Klemmkörpers besitzen oder übersteigen. Das Einwickeln des Ringes aus faserverstärktem Kunststoff erfolgt damit so, daß die gesamte Breite der umlaufenden Nut mit Fasern ausgefüllt ist.

Der erfindungsgemäße Freilauf besitzt einen Ring aus faserverstärktem Kunststoff, der gegenüber dem Freilaufaußenring erheblich verstärkt ausgebildet ist. Der Außendurchmesser des Freilaufaußenrings beträgt dabei etwa das 1,02 - 1,1fache des Durchmessers der außenseitigen Klemmfläche. Dabei beträgt der Außendurchmesser des Rings aus faserverstärktem Kunststoff etwa das 1,3 - 1,8fache des Durchmessers der außenseitigen Klemmfläche des erfindungsgemäßen Freilaufs. Es entsteht ein Freilauf mit einer gegenüber dem Ring aus faserverstärktem Kunststoff filigran ausgeführten Freilaufaußenringumhüllung. Eine Kombination eines derart dünn ausgeführten Freilaufaußenrings mit einem derartig verstärktem Ring aus faserverstärktem Kunststoff hat sich bei Schwingungsversuchen als besonders belastbar und dauerhaltbar erwiesen.

Die Erfindung ist einsetzbar, um der radialen Aufweitung von Stahlringen infolge innerer Belastung wie Innendruck, Flächenpressung oder Kontaktkräften entgegenzuwirken. Durch die zusätzliche Massereduzierung ist die Anwendung auch auf schnellaufende und damit dynamisch beanspruchte Ringe möglich.

Die erfindungsgemäße Ausführung soll nachfolgend an Ausführungsbeispielen näher erläutert werden. Es zeigen:
- Fig. 1: eine schematische Schnittansicht in Umfangsrichtung eines Freilaufes,
- Fig. 2: eine erste in axialer Richtung verlaufende Schnittdarstellung des umwickelten Freilaufaußenrings nach Fig. 1,
- Fig. 3: eine weitere in axialer Richtung verlaufende Schnittdarstellung eines umwickelten Freilaufaußenrings nach Fig. 1 mit eingebrachter Nut,
- Fig. 4: eine schematische Schnittansicht in Umfangsrichtung eines Freilaufs mit einem Gehäuse sowie
- Fig. 5: eine in axialer Richtung verlaufende Schnittdarstellung eines Freilaufes gemäß Fig. 4.

Der Freilauf besteht aus einer Welle 1 (oder einem an sich bekannten Freilaufinnenring - nicht abgebildet) und einem ausschnittsweise dargestellten Freilaufaußenring 3, die um eine gemeinsame Achse 2 ineinander angeordnet, gegeneinander verdrehbar sind und dadurch einen Spalt 4 bilden. In diesem Spalt 4 sind z.B. drei Klemmkörper 5 angeordnet, die radial eine innenseitige Klemmfläche 6 und eine außenseitige Klemmfläche 7 aufweisen, die an die Welle 1 und den Freilaufaußenring 3 angelegt sind und damit eine reibschlüssige Verbindung bilden.

Zur Lagesicherung sind die Klemmkörper 5 in einem Klemmkörperkäfig 8 eingelegt und werden zusätzlich durch eine Zugfeder 9 gesichert. Der Freilaufaußenring 3 kann am Außendurchmesser eine umlaufende Nut 11, die vorzugsweise vor einem Härten des Freilaufaußenringes 3 eingebracht wird, besitzen. In die umlaufenden Nut 11 wird ein Ring aus faserverstärktem Kunststoff 12 zur Vermeidung oder Reduzierung einer Aufweitung des Freilaufaußenrings 3 eingewickelt.

Die Richtung der Fasern ist bevorzugt unidirektional. Dadurch wird ein hoher Elastizitätsmodul des gewickelten Ringes aus faserverstärktem Kunststoff 12 gewährleistet, der hoher ist, als der Elastizitätsmodul des Freilaufaußenringes 3. Damit wird erreicht, daß die Aufweitung des gesamten Freilaufaußenringes 3 infolge der Kontaktkraft der Klemmkörper 5 reduziert wird. Dadurch verringert sich der Verdrehwinkel zwischen der Welle 1 und dem Freilaufaußenring 3 bei Wirkung eines Momentes, wodurch sich der Klemmkörper 5 ebenfalls weniger einrollen kann. Dies hat im Allgemeinen ein höheres Drehmoment zur Folge. Durch die geringere spezifische Dichte des faserverstärkten Kunststoffes reduziert sich die Masse des Freilaufaußenringes 3 gegenüber der eines massiven Stahlringes. Dementsprechend ist ein Einsatz für dynamische Anwendungen, wie hohe Schaltfrequenzen, begünstigt. Weiterhin kann eine Bauraumreduzierung, bei annähernd gleichem Moment, durch Reduzierung des Außendurchmessers des Freilaufaußenringes 3 erreicht werden. ,

Die Tiefe der umlaufenden Nut 11 muß so gewählt werden, daß die Wirkung der Flächenpressung durch den Freilaufaußenring 3 aus Stahl aufgenommen werden kann und nicht auf den gewickelten Ring aus faserverstärktem Kunststoff 12 übergeht.

Zur Aufnahme des Freilaufaußenringes 3 in ein entsprechendes Gehäuse 14 sind vorzugsweise zwei zylindrische Paßflächen 13 vorgesehen. Die Höhe des gewickelten Ringes aus faserverstärktem Kunststoff 12 übersteigt dabei die Höhe der Paßflächen 13 nicht, um eine Beschädigung des Ringes aus faserverstärktem Kunststoff 12 beim Einbringen des Freilaufaußenringes 3 in das Gehäuse 14 zu vermeiden. Ferner können auch mehrere Paßflächen 13 vorgesehen sein, zwischen denen mehrere benachbarte Ringe aus faserverstärktem Kunststoff 12 eingelegt sind (nicht abgebildet).

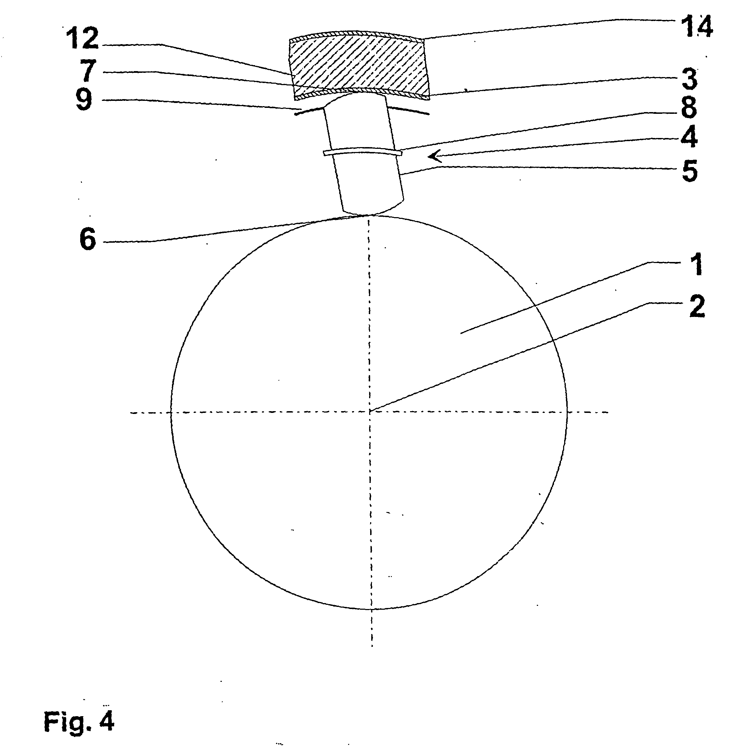

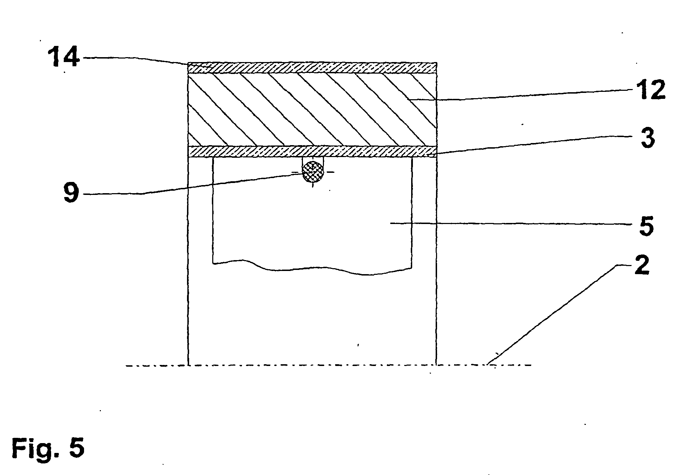

Fig. 4 und Fig. 5 zeigen einen Freilauf, dessen Freilaufaußenring 3 mit einem Ring aus faserverstärktem Kunststoff 12 über die gesamte Breite des Freilaufaußenrings umwickelt ist. Der Ring aus faserverstärktem Kunststoff 12 ist dann wiederum von einem Gehäuse 14 umgeben.

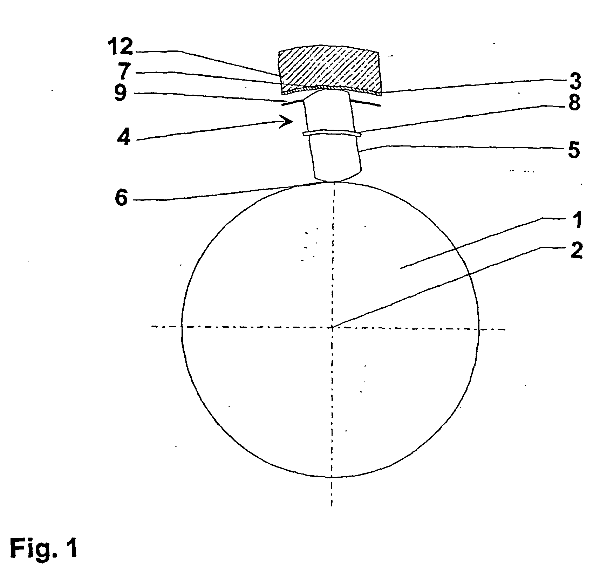

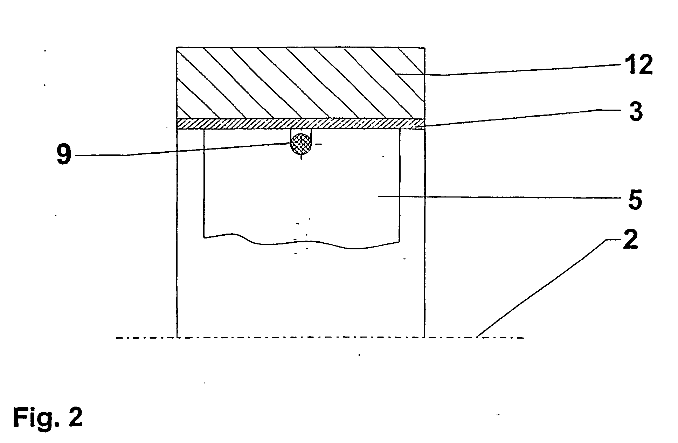

Bei sämtlichen Darstellungen des erfindungsgemäßen Freilaufs gemäß der Fig. 1 - 5 ist die geometrische Dimensionierung insbesondere des Rings aus faserverstärktem Kunststoff 12 sowie des Außendurchmessers des Freilaufaußenrings 3 (und des Gehäuses 14) von großer Bedeutung für die Betriebstauglichkeit und Dauerfestigkeit des Freilaufs. Erfindungsgemäß ist dabei insbesondere der Freilaufaußenring 3 gegenüber dem Ring aus faserverstärktem Kunststoff 12 deutlich verdünnt und verschmälert ausgeführt, wobei insbesondere die in den Patentansprüchen 1 und 2 angegebenen Größenverhältnisse gegenüber dem - von der Achse 2 gemessenen - Durchmesser der außenseitigen Klemmfläche 7 besonders vorteilhafte und im Dauerversuch nachweisbare vorteilhafte Schwingungseigenschaften und dynamische Betriebscharakteristiken des Freilaufs erzeugen.

Die Wandstärke bzw. Wanddicke des Freilaufaußenrings 3 kann - je nach Baugröße - 1 - 1,5 mm betragen, um die beim Betrieb auftretenden Hertz'schen Pressungen aufnehmen zu können. Die Härte des Freilaufaußenrings 3 kann insbesondere HRC = 60+4 betragen.

Der Freilaufaußenring 3 sollte in den Ring aus faserverstärktem Kunststoff 12 mit einem Haftsitz eingepreßt sein. Bei Belastung durch die Klemmkörper 5 werden so die elastischen Anteile des dünnwandigen Stahlringes und Setzungsvorgänge minimiert, die bei einer Spielpassung auftreten würden. Die positive Eigenschaft des hohen Elastizitätsmoduls (E-Modul) des Ringes aus faserverstärktem Kunststoff 12 wird damit sofort bei Lastaufnahme wirksam. Geeignet ist z.B. eine Passungspaarung H7/n6 von Ring aus faserverstärktem Kunststoff 12 und Freilaufaußenring 3.

Der Ring aus faserverstärktem Kunststoff 12 wird gewickelt bzw. hergestellt z.B. aus UHM GY-70 (E-Modul = 290 GPa, also 290 x 10³ N/mm²) (Kohlenstofffaser Ultra High Modulus). Bei der Herstellung ist darauf zu achten, dass die Faser in Umfangsrichtung gewickelt wird. In Frage kommen grundsätzlich alle UHM-Materialen, die einen E-Modul von mindestens 210 GPa (also 210 x 10³ N/mm²) aufweisen.

Der Ring aus faserverstärktem Kunststoff 12 kann nicht direkt in andere Bauteile eingepreßt werden, da hier die Gefahr besteht, dass die Faser beim Einpressen verletzt wird und die Eigenschaften des Ringes negativ beeinflußt werden würden.

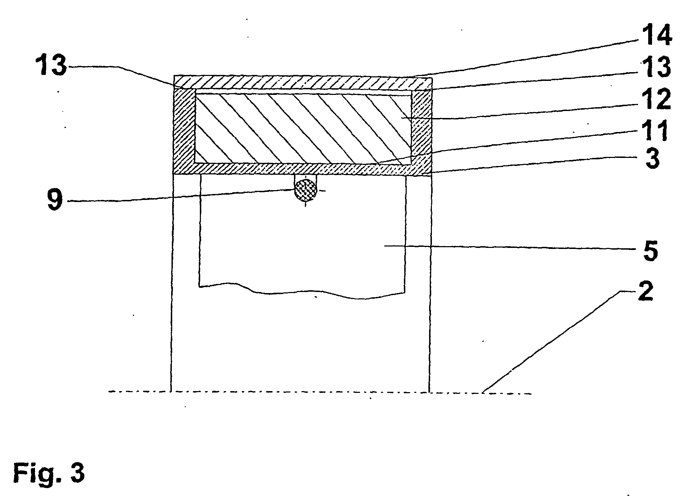

Zur Adaption mit anderen Bauteilen kann der Ring aus faserverstärktem Kunststoff 12 gemäß Fig. 3 und Fig. 4 nochmals von einem Gehäuse 14 (oder einem weiteren Ring, insbesondere einem Außenring) umfasst werden, das die Aufgabe hat, den Ring aus faserverstärktem Kunststoff 12 zu schützen und außerdem ein Einpressen in weitere Bauteile ermöglicht. Das Gehäuse 14 sollte aus Gewichtsgründen dünnwandig ausgeführt werden und aus einem metallischen Werkstoff (z.B. Stahl, Aluminium-Knetlegierungen etc.) gefertigt sein. Insbesondere kann die Wandstärke des Gehäuses 14 bzw. des Ringes in etwa der Wandstärke des Freilaufaußenrings 3 entsprechen (vgl. Fig. 4 und Fig. 5).

In einer besonders vorteilhaften Ausführungsform wird der erfindungsgemäße Freilauf als gewichtsparender und geräuscharmer Klemmkörperfreilauf für (Hochleistungs-)Fahrräder (insbesondere für Fahrradnaben) verwendet, wodurch bislang aus Gewichtsgründen verwendete Klemmrollenfreiläufe, deren Geräuschentwicklung in Kauf genommen wurde, ersetzt werden können.

### BEZUGSZEICHEN

- 1: Welle
- 2: Achse
- 3: Freilaufaußenring
- 4: Spalt
- 5: Klemmkörper
- 6: innenseitige Klemmfläche
- 7: außenseitige Klemmfläche
- 8: Klemmkörperkäfig
- 9: Zugfeder
- 11: umlaufende Nut
- 12: Ring aus faserverstärktem Kunststoff
- 13: Paßflächen
- 14: Gehäuse

## Patentansprüche

1. Freilauf, insbesondere Klemmrollen- oder Klemmkörperfreilauf, mit um eine gemeinsame Achse (2) ineinander angeordneten, zueinander verdrehbaren Elementen (1,3) die einen Spalt (4) bilden, in dem Klemmelemente, insbesondere Klemmrollen oder Klemmkörper (5) so angeordnet sind, daß mit den zugewandten Mantelflächen der Elemente (1,3) über die Klemmflächen (6,7) eine reibschlüssige Verbindung herstellbar ist, wobei des äußere Element einer Freilaufaußenring (3) bildet,
**dadurch gekennzeichnet, daß** der Freilaufaußenring (3) mit einem Ring aus faserverstärktem Kunststoff (12) umwickelt ist und der Außendurchmesser des Rings aus faserverstärktem Kunststoff (12) etwa das 1,3 - 1,8fache des Durchmessers der außenseitigen Klemmfläche (7) beträgt.

2. Freilauf nach Anspruch 1,
**dadurch gekennzeichnet, daß** der Außendurchmesser des Freilaufaußenrings (3) etwa das 1,02 - 1,1fache des Durchmessers der außenseitigen Klemmfläche (7) beträgt.

3. Freilauf nach Anspruch 1 oder 2,
**dadurch gekennzeichnet, daß** der Elastizitätsmodul des faserverstärkten Kunststoffes (12) höher ist, als der Elastizitätsmodul des Freilaufaußenrings (3).

4. Freilauf nach Anspruch 3,
**dadurch gekennzeichnet, daß** der Elastizitätsmodul des faserverstärkten Kunststoffes (12) 210 GPa (also 210 x 10³ N/mm²) übersteigt.

5. Freilauf nach einem der Ansprüche 1 - 4,
**dadurch gekennzeichnet, daß** in den Freilaufaußenring (3) eine umlaufende Nut (11) eingebracht ist, in die der Ring aus faserverstärktem Kunststoff (12) eingewickelt ist.

6. Freilauf nach einem der Ansprüche 1 - 5,
**dadurch gekennzeichnet, daß** die Höhe des Ringes aus faserverstärktem Kunststoff (12) nicht über die Paßflächen (13) des Freilaufaußenrings (3) hinausragt.

7. Freilauf nach einem der Ansprüche 1 - 6,
**dadurch gekennzeichnet, daß** die Wicklungen des Ringes aus faserverstärktem Kunststoff (12) mehrlagig ausgeführt sind.

8. Freilauf nach einem der Ansprüche 1 - 7,
**dadurch gekennzeichnet, daß** die Wicklungen des Ringes aus faserverstärktem Kunststoff (12) im wesentlichen unidirektional in Umfangsrichtung angeordnet sind.

## Claims

1. A free-wheel, in particular a pinch roller free-wheel or a pinch body free-wheel, having elements (1, 3) which can rotate with respect to one another about a common axis (2), are arranged one inside the other and form a gap (4) in which pinch elements, in particular pinch rollers or pinch bodies (5) are arranged in such a way that a frictionally locking connection can be brought about with the facing outer surfaces of the elements (1, 3) by means of the clamping surfaces (6, 7), whereby the outer element forms an outer ring of a free-wheel (3), **characterized in that** a ring made of fiber-reinforced plastic (12) is wound around the outer ring of the free-wheel (3) and the external diameter of the ring made of fiber- reinforced plastic (12) is approximately 1.3 to 1.8 times the diameter of the external clamping surface (7).

2. The free-wheel as claimed in claim 1, **characterized in that** the external diameter of the outer ring of the free-wheel (3) is approximately 1.02 to 1.1 times the diameter of the external clamping surface (7).

3. The free-wheel as claimed in claim 1 or 2, **characterized in that** the modulus of elasticity of the fiber-reinforced plastic (12) is higher than the modulus of elasticity of the outer ring of the free-wheel (3).

4. The free-wheel as claimed in claim 3, **characterized in that** the modulus of elasticity of the fiber-reinforced plastic (12) exceeds 210 GPa (that is to say 210 x 10³ N/mm²).

5. The free-wheel as claimed in one of claims 1 to 4, **characterized in that** a circumferential groove (11) into which the ring made of fiber-reinforced plastic (12) is wound is formed in the outer ring of the free-wheel (3).

6. The free-wheel as claimed in one of claims 1 to 5, **characterized in that** the height of the ring made of fiber-reinforced plastic (12) does not exceed the fitting surfaces (13) of the outer ring of the free-wheel (3).

7. The free-wheel as claimed in one of claims 1 to 6, **characterized in that** the windings of the ring made of fiber-reinforced plastic (12) are of multilayered design.

8. The free-wheel as claimed in one of claims 1 to 7, **characterized in that** the windings of the ring made of fiber-reinforced plastic (12) are arranged essentially unidirectionally in the circumferential direction.

## Revendications

1. Roue libre, notamment roue libre de rouleau de serrage ou de corps de serrage, dotée d'éléments (1, 3) disposés l'un dans l'autre autour d'un axe commun (2), pouvant tourner les uns par rapport aux autres et qui forment un intervalle (4) dans lequel des éléments de serrage, notamment des rouleaux de serrage ou des corps de serrage (5) sont disposés de manière à ce qu'une liaison par frottement puisse être établie par les surfaces de serrage (6, 7) avec les surfaces d'enveloppes tournées vers eux des éléments (1, 3), l'élément extérieur formant une bague extérieure de roue libre (3),
**caractérisée en ce que** la bague extérieure de roue libre (3) est entourée d'un anneau en matière plastique renforcée aux fibres (12) et que le diamètre extérieur de l'anneau en matière plastique renforcée aux fibres (12) représente environ 1,3 à 1,8 fois le diamètre de la surface de serrage sur le côté extérieur (7).

2. Roue libre selon la revendication 1,
**caractérisée en ce que** le diamètre extérieur de la bague extérieure de roue libre (3) représente environ 1,02 à 1,1 fois le diamètre de la surface de serrage sur le côté extérieur (7).

3. Roue libre selon la revendication 1 ou 2,
**caractérisée en ce que** le module d'élasticité de la matière plastique renforcée aux fibres (12) est plus élevé que le module d'élasticité de la bague extérieure de roue libre (3).

4. Roue libre selon la revendication 3,
**caractérisée en ce que**
le module d'élasticité de la matière plastique renforcée aux fibres (12) dépasse 210 GPa (donc 210 x 10³ N/mm²).

5. Roue libre selon l'une quelconque des revendications 1 à 4,
**caractérisée en ce que**,
dans la bague extérieure de roue libre (3) est pratiquée une rainure périphérique (11) dans laquelle l'anneau en matière plastique renforcée aux fibres (12) est enroulé.

6. Roue libre selon l'une quelconque des revendications 1 à 5,
**caractérisée en ce que**
la hauteur de l'anneau en matière plastique renforcée aux fibres (12) ne dépasse pas des surfaces d'ajustage (13) de la bague extérieure de roue libre (3).

7. Roue libre selon l'une quelconque des revendications 1 à 6,
**caractérisée en ce que**
les enroulements de l'anneau en matière plastique renforcée aux fibres (12) sont réalisés en plusieurs couches.

8. Roue libre selon l'une quelconque des revendications 1 à 7,
**caractérisée en ce que**
les enroulements de l'anneau en matière plastique renforcée aux fibres (12) sont disposés sensiblement de manière unidirectionnelle dans le sens circonférentiel.
